# EUROPEAN PATENT APPLICATION

(11) **EP 2 295 130 A1**
(43) Date of publication of application: **16.03.2011**
(21) Application number: 08757718.5
(22) Date of filing: 13.06.2008
(51) Int. Cl.: B01D 53/78, B01D 53/50

(54) **A METHOD AND DEVICE FOR DESULFURIZATION OF THE SMOKE DISCHARGED FROM SHIP**

(71) Applicant: Peng, Sigan, Hubei 430072 (CN)
(72) Inventor: Peng, Sigan, Hubei 430072 (CN)
(74) Representative: Fuchs
(86) International application number: PCT/CN2008/071307
(87) International publication number: WO 2009/149603

(57) **Abstract**

A method and device for desulfurization of the smoke discharged from ship by sea water are provided. The method comprises: washing by sea water, discharging acidic sea water, deacidifying and discharging the deacidified sea water. The device includes scrubber and water-saving deacidification plant. The upside of the scrubber is the wash layer which connects to the washing sea water pump through lines. The downside of the scrubber is cooling layer. The one side of the scrubber connects to the discharging line of the ship engine through the washing gas inlet lines. The other side of the scrubber connects to the washed gas outlet lines. The bottom of the scrubber connects to the water-saving deacidification plant. The water-saving deacidification plant connects to pump for mixing sea water, blower fan and total water outlet line for discharging the deacidified sea water.

## Description

### Field of the invention

This invention relates to a ship flue gas desulfurization (FGD) method and apparatus, which employ seawater to remove SO₂ and other pollutant discharged from a marine engine, and belongs to the technical fields of atmospheric environmental protection, ocean resources development and utilization, and prevention and control of shipping exhaust pollutant.

### Background of the invention

The problem of reducing the SO₂ discharged from the ship is getting more serious and drawing people's attention worldwide, as related international legislations are getting more strict and mature. Shipping industry is an industry that correlates the modem global economy, which has a large amount of ships equipped with fuel oil engines. Completely relying on using low-sulfur fuel to achieve the reduction of the discharged oxysulfide may lead to dramatically rising economic cost for the shipping industry. Hence, providing a ship with an economical and practical FGD process seems to be imperative.

Under a mobile condition in different sea areas and with gas temperature as high as 200°C to 490°C, compared to the FGD technologies used in land coal-fired industrial facility, the FGD technologies used in ships must be considered for their practicality with more concerns in term of economic problems. That is, it requires the total costs of the ship FGD facility, including manufacturing cost and operational cost, to be significantly lower than the total costs saved by substituting low-sulfur fuels.

As a result, soon after the IMO (International Maritime Organization) brought out the ship desulfurization regulation in 2005, the potential economy advantages of seawater FGD technologies were recognized. In 2007, a research carried out together by scholars from four internationally well-known universities clearly concluded that using the ocean resource, i.e., the seawater, to realize SO₂ reduction in ships is an expectation that people had been pursuing for a long period but had not realized.

A research report (ISBN: 978-91-976534-1-1) made by the allied institute of the four universities (Massachusetts Institute of Technology, University of Tokyo, Chalmers University of Technology, and Swiss Federal Institute of Technology Zurich) entitled "Seawater scrubbing - reduction of SOx emissions from ship exhausts" pointed out that "it is shown that seawater scrubbing is a promising technology for reducing sulfur oxide emissions from ships....would therefore require detailed case studies....further research would be needed in order to reach a conclusion".

Nowadays, there are existing technologies that apply seawater scrubbing methods to reduce ship flue gas pollution, some of which are described hereinbelow.

1. As disclosed in Chinese patent application No. 200710012371.1, entitled "apparatus and method for treating ship exhausts by seawater scrubbing" and published on January 16, 2008, in a hollow fiber membrane contactor used as a scrubber, the ship exhaust after dust removal pretreatment is scrubbed with seawater. A control system, composed of a SO₂ consistency monitor, a water quality monitor, and a PLC programming controller, detects and records in real-time the SO₂ concentration and water discharge quality in the processed ship exhaust, and controls the water discharge. This technology has the following problems.

1) The functions of the scrubber in this technology are realized by a hollow fiber membrane contactor. This hollow fiber membrane contactor only tolerates tens of centigrade in temperature, which cannot be used for treating the flue gas with a temperature as high as 200-490°C discharged by a marine engine.

2) Pressure drop and resistance are very high when the hollow fiber membrane contactor is used for scrubbing. Operational cost and energy consumption would be quite high if any additional booster fan is installed.

2. A US literature in 2007, entitled "Seawater scrubbing - reduction of SOx emissions from ship exhausts" (ISBN: 978-91-976534-1-1). This research report recites: "it is shown that seawater scrubbing is a promising technology for reducing sulfur oxide emissions from ships. With calculations based on a 12 MW engine burning fuel with a 3% sulfur content, marine chemical analysis was made on ship seawater scrubbing to obtain different efficiencies of desulfurization, and at different water temperatures, to obtain the required water volumes for six different types of water types: 1) absorbing SOx (during the scrubbing process), 2) diluting the scrubbing water to achieve a pH of 6.5, 3) further diluting to achieve a pH within 0.2 units of that in the ambient water, and no more that 1% reduction in a dissolved oxygen concentration. Keeping a given scrubbing efficiency...would require significantly larger water volumes for scrubbing and dilution...It would therefore require detailed case studies. For example, further research would be needed in order to reach a conclusion on whether it is possible to reduce the volumes of dilution water required by aeration of the scrubbing water and addition of base to neutralize the acidic sulfur oxides. ".

The literature is a representative one in the current research on the seawater scrubbing methods for SO₂ emission reduction in ships. However, it remains in the stage of principle exploring and researching. The problems of low absorbing efficiency and large diluting water volume need to be further studied and solved. To prevent the discharged water from damaging the environment, US Environmental Protection Agency (EPA) and IMO have passed regulations about the blending of discharged water with surrounding seawater. The blending process is defined as quick blending area and slow blending area. The boundary pH value is 6.5 for the quick blending area, and it is required to reach the boundary pH value in 15 minutes. For the slow blending area, the difference of boundary pH value and surrounding seawater pH value must be less than 0.2. The engine studied and calculated by the literature is a 12 MW ship FGD system. In order to fulfill the environmental requirements about flue gas and sea water discharge, thousands of tons of seawater per hour must be provided to the ship. The seawater needs further dilution after being discharged out of the ship and further blends with surrounding seawater that is not less than 40000 times of its volume.

This research described in the document did not give a technical solution of a practical process and apparatus.

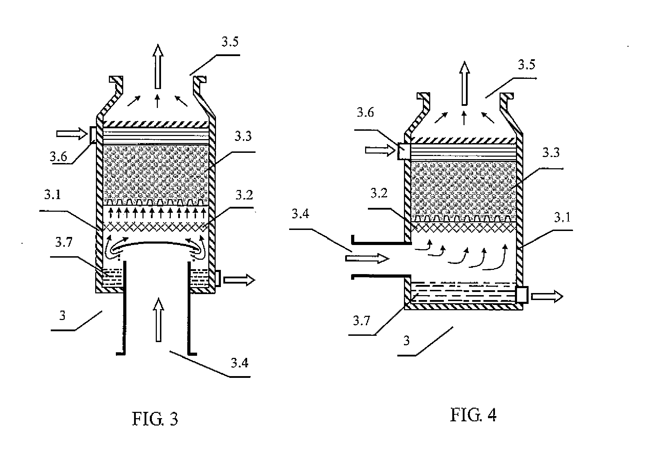

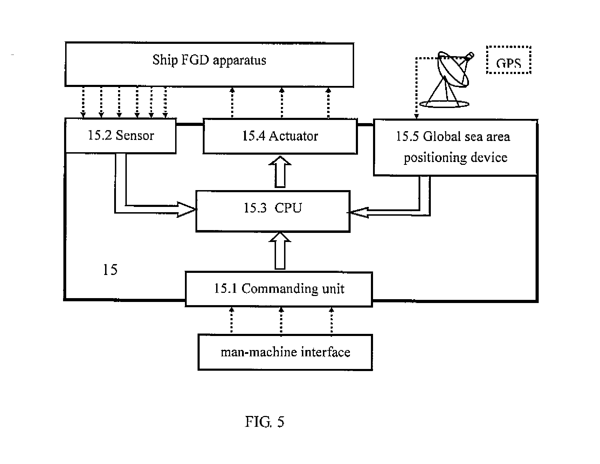

3. In a document entitled "Ecosilencer Exhaust Gas Cleaning Presentation" (February 2006, Canada), a seawater scrubbing technical system and apparatus in EcoSilencer way (FIG. 5) were introduced. This technical apparatus was experimented with for more than 6 years until 2006. The core component, i.e., the scrubber, adopts a technical solution described in the US patent No. 7,056,367 entitled "Method and apparatus for scrubbing gases, using mixing vanes" (FIG. 4).

The high-temperature flue gas discharged from a marine engine must be cooled so that SO₂ can be absorbed. For this reason, the scrubber in US 7,056,367 adopts "passing the exhaust gases through a scrubbing liquid bath", i.e., the bubbling scrubbing method. However, the high-temperature flue gas cooling process and scrubbing-absorbing process are carried by the water in the same tank at the same time. Hence, the mass-transfer efficiency is quite low. In addition, the cooling process and the absorbing process conflict with each other. In order to increase absorptivity, the only way is to add the water volume and increase the pressure loss, which subsequently causes significantly increased energy consumption and operational cost. Obviously, at present the seawater scrubbing technical system and device that adopt this scrubber have to accept the conflict of cooling the high-temperature flue gas and absorbing SO₂ at a low-temperature, as well as the conflict of the scrubbing effect and the cost reduction.

In conclusion, existing research and experimental technologies must confront with similar issues when it comes into the practical fields:

1) With the acceptable cost at present, it is difficult to meet the environmental requirements about flue gas discharge and seawater discharge. Presently, energy consumption and cost are both very high to meet the regulations for water discharge because of the large volume of consumed scrubbing water and diluting water. The cost will further increase if the requirements for water discharge are stricter in the future.

2) The existing technologies are unsuitable for the mobile nature of a ship. Different sea areas and control areas have different environmental conditions and control requirements. The environmental condition keeps changing for a marine ship sailing in different sea areas and control areas, such as the seawater quality, the sulfur content in different batches of fuel, the discharging restrictions in various environments, etc. A flue gas desulfurization system with fixed technical parameters cannot be practically employed in ships.

Apparently, the expected goal to use marine resource to eliminate air pollution caused by ships will not be reached if the above mentioned problems remain unsolved.

### Summary of the invention

With the international legislations about the ship SO₂ reduction getting strict and mature day by day, practical ship SO₂ reduction methods and apparatus using seawater must be brought out to realize the expected goal to use the marine resources to eliminate ship atmospheric pollution.

A first object of the present invention is to overcome the shortcomings of existing ship flue gas desulfurization (FGD) methods, and to provide a ship FGD method which offers high desulfurization efficiency, consumes less volume of scrubbing and diluting seawater, consumes less energy, has lower cost, and is suitable to ships sailing in different sea areas and control areas.

A second object of the present invention is to overcome the shortcomings of existing ship FGD apparatus, and to provide a ship FGD apparatus which offers high desulfurization efficiency, consumes less volume of scrubbing and diluting seawater, has lower manufacturing and operational costs, is compact in size, has a long lifespan, and is suitable for ships which have limited usable space and large sailing range.

The ship FGD method of the present invention includes the following steps:
a. scrubbing: after cooling the high-temperature flue gas containing SO₂ discharged from a marine engine, scrubbing the flue gas, and discharging the scrubbed and cleaned flue gas; wherein said scrubbing is done with seawater in a scrubber;
b. transferring acidic seawater: transferring the acidic seawater formed by absorbing SO₂ during the scrubbing process to a water-saving deacidification device;
c. deacidifying: blending the acidic seawater into the water-saving deacidification device with alkaline seawater to make mixed seawater, and blowing air to the mixed seawater; and
d. discharging the seawater: discharging the seawater suitable to be discharged into the sea after being deacidified..

Based on the technical solution of the ship FDG method, further technical solutions with additional features are provided:

In the ship FGD method, said scrubbing step of scrubbing with the seawater in the scrubber is scrubbing in the scrubber having a scrubbing layer with fillings.

In the ship FGD method, the flow of the alkaline seawater blended into the water-saving deacidification device in the step of deacidifying is regulated by a regulator, i.e., by means of a valve with an adjustable opening and/or a pump with an adjustable output. The flow of the air blown into the water-saving deacidification device is regulated by a regulator, i.e., by means of a valve with an adjustable opening, a damper and/or an adjustable fan with an adjustable output.

In the ship FGD method, the flow of the scrubbing seawater in the scrubbing step is regulated by a regulator, i.e., by means of a valve with an adjustable opening and/or a pump with an adjustable output.

In the ship FGD method, regulating by the regulator is done by manual work and/or a desulfurization controller according to environmental requirements for the flue gas emission and seawater discharge in the sailing area of ship.

In the ship FGD method, there is an impurity separating step between the scrubbing step and the deacidifying step. The separating step is to separate impurities by a separator and to discharge the separated impurities through a waste pipe.

In a ship FGD apparatus using the ship FGD method of the present invention, the technical solution includes a scrubber and a water-saving deacidification device. The upper part of said scrubber is a scrubbing layer in communication with a scrubbing seawater pump through pipelines; and the lower part of the scrubber is a cooling layer. One end of the scrubber is in communication with a flue gas discharging pipe of a marine engine through a scrubbing gas inlet pipe, and the other end is connected to a scrubbing gas outlet pipe. The lower part of the scrubber is in communication with the water-save deacidification device. The water-saving deacidification device connects with a blending seawater pump, a fan, and an overall drain pipe for the seawater that is suitable for discharge after being deacidified.

Based on the above technical solution of the ship FGD apparatus, further technical solution with additional features are provided:

The water-saving deacidification device of the ship FGD apparatus has an alkaline seawater blending passage, at which an alkaline seawater flow regulator is provided. The flow regulator is selected from a valve with an adjustable opening or/and a pump with an adjustable output. The water-saving deacidification device has an air-inflow passage, at which an air flow regulator is provided. The air flow regulator is selected from a valve with an adjustable opening, a damper or/and a fan with an adjustable output.

In the ship FGD apparatus, the scrubber is provided with a scrubbing seawater-inflow passage, at which a scrubbing seawater flow regulator selected from a valve with an adjustable opening or/and a pump with an adjustable output is installed.

In the ship FGD apparatus, a control lever is provided on the valve or the damper, an electrical speed governor is provided on the pump or the fan, and the control lever and electrical speed governor may be coupled to a desulfurization controller.

In the ship FGD apparatus, the scrubber includes a housing, a cooling layer, a scrubbing layer with fillings, and a water collecting tank, wherein the cooling layer is located under the scrubbing layer with fillings.

In the ship FGD apparatus, a separator for separating impurities is installed between the scrubber and the water-saving deacidification device.

In the ship FGD apparatus, the desulfurization controller includes a commanding unit, a sensor, a central processing unit (CPU), an actuator, and a global sea area positioning device.

The technical principle and overall technical effects of the ship FGD method and ship FGD apparatus of the present invention are described below.

Technical principle: Main functions of the ship FGD method and apparatus, as well as the problems for them to solve are on the aspects of scrubbing and absorbing, water discharging, and mobile sailing.

1) Scrubbing and absorbing: Seawater scrubbing is employed to purify the flue gas so as to remove SO₂ and other pollutants in the exhaust from marine fuel oil engines. Seawater has strong dissolving and absorbing ability for SO₂ because of its physical and chemical characteristics, and at the same time, seawater can scrub and absorb nitrogen oxide and particulates as well. However, ships have a limited usable space, and consequently the FGD apparatus as a practical technical processing method and industry apparatus has to be correspondingly small in size, and short in processing time. In other words, the scrubbing and absorbing must be completed in a very short time. It means that the technical apparatus must possess not only very high total absorptivity, but also very high absorbing speed, and the efficiency of the absorbing and scrubbing must be extremely high. For the above reasons, the powerful dissolving and absorbing ability of seawater must be coordinated with a powerful mass-transfer ability which passes the pollutants from the flue gas to the liquid seawater. On the other hand, the temperature of exhaust from a diesel motor could be as high as 490°C. Either for absorbing and scrubbing SO₂ therein or for protecting the technical apparatus, the high-temperature flue gas must be cooled down before the scrubbing step. To address this issue, the scrubbing process of this invention employs a counter-flow filling scrubber, and the highly efficient method and apparatus by which the cooling and scrubbing take place at different sections. The seawater is used as scrubbing liquid. The scrubbing functional section is composed of filling layers. The scrubbing liquid, i.e., seawater, is distributed to wash the fillings evenly by a water distributor from upside to downside. The high-temperature gas of the exhaust is cooled and then passes the filling layer from a bottom end and goes upwards. The scrubbing seawater, on the other hand, passes the filling layer starting from the top and goes downwards. Because of the huge surface area formed by the fillings, a huge contact area is provided between the gas and the liquid, so that mass-transfer ability and scrubbing and absorbing efficiency are very high. The aim of highly efficient emission reduction can be achieved. The technical solution of employing the fillings can significantly reduce the resistance to the passing gas, and guarantee the technical economic performance of realizing a high scrubbing and absorbing efficiency and at the same time lowering the operational cost of the processing apparatus.

2) Water discharging processing: The seawater used for scrubbing has dissolved SO₂ therein and has become acidic, and has to be treated to raise pH thereof before being discharged into the natural sea. Existing technologies employ simple dilution methods which consume a large volume of diluting water and cause high energy consumption and cost. To overcome these shortcomings, the present invention introduces a water-saving deacidification device to decrease the needed diluting water volume. SO₂ dissolves in the scrubbing seawater and turns to SO₃²⁻ and other acidic materials. They then turn to carbonic acid and other acid materials when fresh alkaline seawater is blended in. Therefore, the simple dilution method requires a huge volume of diluting water, and the pH value rises slowly. In the water-saving deacidification device of the present invention, fresh alkaline seawater is blended in, and simultaneously air is blown in, whereby the carbonic acid volatilizes quickly and the pH value of the scrubbing seawater rises rapidly, so the volume of the needed diluting water can be reduced a lot.

3) Mobile adjustment: A ship regularly sails in different sea areas, thus it faces changing conditions such as the seawater quality in different sea areas, the sulfur content of different batches of fuel, the discharging restrictions in different environments. Therefore, deacidification technical system with fixed technical parameters cannot be employed on the ship. In the present invention, the flow of the scrubbing seawater and the flow of the blending seawater in the water-saving deacidification device are adjusted, the flow of the air blown to the water-saving deacidification device are adjusted, and a controller including CPU is used to control the above described adjustments. Thus, the FGD method and apparatus are well applicable for the ship which keeps sailing.

The performance of the ship FGD method and apparatus of this invention conforms to environmental protection laws and regulations. Technical effects are significant.

Firstly, the efficiency in emission reduction is high. It can reduce 99% oxysulfide, 20% oxynitride, and 80% particles. It has significance to international shipping business for the environmental objectives. In 2005, IMO published restrictions for SECA (SOx Emission Control Area) that the sulfur content of fuel oils used on ships must not exceed 1.5%, or the ships must be equipped with an FGD apparatus to make the sulfur content of exhaust emissions equal to that of exhaust emissions from ships using fuel oil with sulfur content not exceeding 1.5%, i.e., the "desulfurized fuel oil equivalence sulfur content" must not exceed 1.5%. Other international organizations are pursuing a goal of 0.1 % sulfur content in fuel oils. Currently, the average sulfur content of heavy oils worldwide is approximately 3%, so the scrubbing efficiency must be 50% to achieve the goal of 1.5% of the desulfurized fuel oil equivalence sulfur content, and must be 96.7% to achieve the goal of 0.1 % of the desulfurized equivalent fuel oil sulfur content.

Secondly, a real example has demonstrated that they can ensure excellent emission reduction result and environmental protection performance when moving between different sea areas where the seawater quality, the sulfur content in the fuel oils, and the environmental restrictions change constantly.

Thirdly, the discharged water of the ship is environment friendly As mentioned above, the EPA and the IMO regulate that the scrubbing water discharged by the ship must make the boundary pH value for quick blending area to reach 6.5 within 15 minutes. Method and apparatus of the present invention enable the pH value of discharged water to reach 6.5 before it is discharged out of the ship to the sea; and as a result, the quick blending area is not even needed. The harmful effect to the sea for 15 minutes is eliminated completely at the very first step. On the other hand, the diluting rate in the slow blending area can be decreased to 1:2000 from 1:40000. Compared to existing technologies, merely 1/20 surrounding seawater is needed to blend. The slow blending area is reduced significantly and the friendship between the discharged water and the environment is improved significantly.

Fourthly, it decreases the manufacture and operational costs significantly by many ways, including reducing the consumption of operational energy and seawater volume, whereby ensuring the realization of the good technical economic goal that the total cost is significantly lower than the total cost saved by substituting low-sulfur fuels.

### Brief description of the drawings

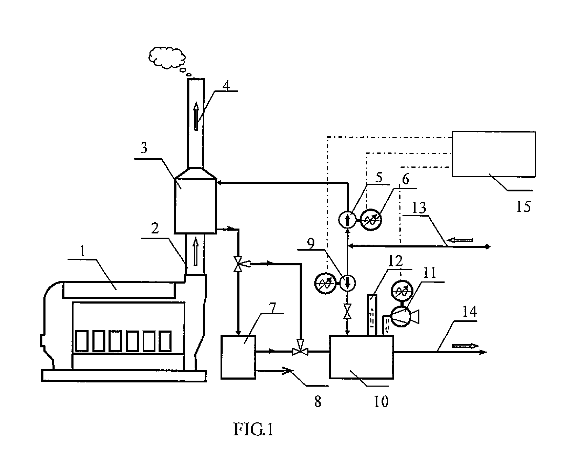

FIG. 1 is a schematic diagram showing a ship FGD method and apparatus according to the present invention, and the embodiment has a desulfurization controller.

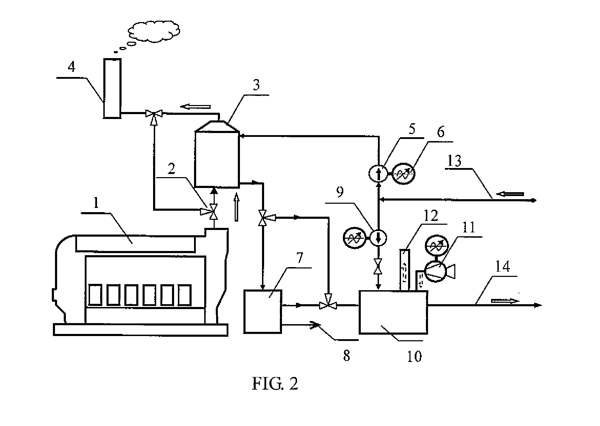

FIG. 2 is a schematic diagram showing the ship FGD method and apparatus according to another embodiment of the present invention. This embodiment has no desulfurization controller. A scrubber 3 has a bypass flue gas discharging pipe, and that is to say, a marine engine communicates with a scrubbing gas outlet pipe directly by a flue gas discharging pipe to facilitate switching of the scrubber 3.

FIG. 3 is a schematic diagram showing the structure of the scrubber 3 of the ship FGD apparatus according to an embodiment of the present invention. In FIG. 3, an air inlet pipe 3.1 leads high-temperature flue gas 3.2 into the scrubber 3 from the bottom thereof which is suitable for the implementation situation where the flue gas enters the scrubber vertically upwards.

FIG. 4 is a schematic diagram showing the structure of the scrubber 3 of the ship FGD apparatus according to a further embodiment of the present invention. An air inlet pipe 3.1 leads high-temperature flue gas 3.2 into the scrubber 3 from its side wall at a lower end, which is suitable for the implementation situation where the flue gas enters the scrubber laterally and then goes upwards.

FIG. 5 is a block diagram showing the process of the desulfurization controller of the ship FGD apparatus, according to the present invention.

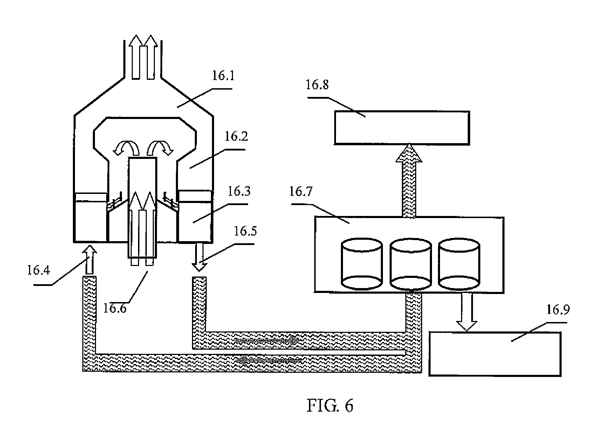

FIG 6 is a schematic diagram showing a prior art of "the EcoSilencer sea water scrubbing system". Its scrubber uses the technical solution of the US patent No. 7,056,367, which includes a co-axial nested inlet conduit, a hot conduit, an outlet conduit, a counter-flow passing gas exhaust, and a tank containing scrubbing liquid, wherein ends of the heat conduit and the outlet conduit are operatively interconnected and immersed in the scrubbing liquid within the tank, and the heat conduit has a star-shaped cross section to increase the heat conduction area such that more heat will reheat the exhaust gas to increase the exhaust gas temperature beyond the dew point by at least 30° C.

Names of components or structures corresponding to the reference numbers in the drawings are as follows.

FIG. 1 and FIG. 2: 1 - marine engine, 2 - scrubbing gas inlet pipe, 3 - scrubber; FIG. 3 and FIG. 4: 3.1 - housing, 3.2 - cooling layer, 3.3 - scrubbing layer with fillings, 3.4 - flue gas entrance, 3.5 - discharge clean gas, 3.6 - scrubbing seawater inlet pipe, 3.7 - liquid collecting pool; FIG. 1 and FIG. 2: 4 - scrubbing gas outlet pipe, 5 - scrubbing seawater pump, 6 - scrubbing speed governor, 7 - separator, 8 - separator waste pipe, 9 - blending seawater pump, 10 - water-saving desulfurization device, 11 - fan, 12 - exhaust pipe, 13 - overall water inlet pipe, 14 - overall water drain pipe, 15 - desulfurization controller; FIG 5: 15.1 - commanding unit, 15.2 - sensor, 15.3 - central processing unit (CPU), 15.4 - actuator, 15.5 - global sea area positioning device. FIG. 6: 16.1 - scrubbing and re-heating the exhaust, 16.2 - scrubbed flue gas re-heating area, 16.3 - mixing flue gas and seawater in the scrubber, 16.4 - seawater entering, 16.5 - seawater transferred to the separator and the heat interchanger, 16.6 - exhaust, 16.7 - separator and filter, 16.8 - discharging clean water, 16.9 - Discharging mud.

### Detailed description of embodiments

Further description of the ship FGD method and apparatus according to the present invention is given below with the reference to the drawings and the embodiments.

**A:** The ship FGD method according to the invention is further described hereinbelow.

**Embodiment 1:** As shown in FIG. 1, there is a desulfurization controller. The ship FGD method of this embodiment comprises the following steps.

a. Scrubbing: after cooling high-temperature flue gas that contains SO₂ discharged from a marine engine, scrubbing the flue gas, and discharging the cleaned flue gas after scrubbing. The scrubbing step is scrubbing with seawater in the scrubber. b. Transferring acidic seawater: transferring the acidic seawater, which is formed in the scrubbing process by absorbing SO₂, from the scrubber to a water-saving deacidification device. c. Deacidifying: blending the acidic seawater in the water-saving deacidification device with alkaline seawater to become mixed seawater, and blowing air into the mixed seawater; d. Discharging water: discharging into the sea the seawater that is suitable for discharge after being deacidified. The scrubbing step of scrubbing with seawater in the scrubber means scrubbing in the scrubber with a scrubbing layer with fillings.

As a ship sails between different sea areas, in order to adapt to the changing conditions in different sea areas, the sulfur content of different batches of fuels, and the discharging regulations in different countries and areas for flue gas and discharged water, the flow of the alkaline seawater blended into the water-saving deacidification device in the deacidifying treatment is regulated by a regulator, i.e., by a pump with an adjustable output, or a valve with an adjustable opening, or the combination of a pump with an adjustable output and a valve with an adjustable opening. The flow of the air blown into the mixed seawater in the water-saving deacidification device is regulated by a regulator, i.e., by means of a fan with an adjustable output , or a valve with an adjustable opening, or a damper, or the combination of a valve and a fan, or the combination of a damper and a fan. The flow of the scrubbing seawater used in the scrubbing step is regulated by a regulator, i.e., by means of a pump with an adjustable output, or a valve with an adjustable opening, or the combination of a valve with an adjustable opening and a pump with an adjustable output. The regulating by a regulator is controlled by the desulfurization controller according to different environmental requirements in different sea areas for exhaust emission and seawater discharging. Manual work regulating is another embodiment. There may exist an impurity separating step between the scrubbing step and the deacidifying step. The separating step means separating impurities by a separator and then discharging the separated impurities through a waste pipe.

The ship in this embodiment is equipped with a 12MW diesel engine. The discharged flue gas has a temperature of 200-490°C, and the discharged flue gas volume is approximately 67,095Nm³/h. Under the condition of 3% sulfur content of the fuel oil, adopting desulfurization method of the present invention enables the discharged SO₂ to be reduced such that desulfurized fuel oil equivalence sulfur content reaches 0.1 %, and the discharged water has a pH≥6.5. The seawater consumption in different sea areas is as follows:
the Baltic Sea scrubbing seawater 300m³ /h blending seawater 1100m³ /h
the North Sea scrubbing seawater 280m³ /h blending seawater 950m³ /h

**Embodiment 2:** As shown in FIG. 2, this embodiment differs from the embodiment 1 in that the scrubber 3 has a bypass flue gas discharging pipe, and that is to say, a marine engine communicates with a scrubbing gas outlet pipe directly by a flue gas discharging pipe to facilitate switching the scrubber 3. The desulfurization control is completed by manual work.

This embodiment is implemented on a large tonnage ship which is equipped with a 60MW diesel fuel engine. The discharged flue gas temperature is 200-430°C, and the discharged flue gas volume is approximately 310,100Nm³/h. Under the condition of 3% sulfur content of fuel oils, adopting desulfurization method of the present invention enables the discharged SO₂ to be reduced such that desulfurized fuel oil equivalence sulfur content is able to fulfill SECA control standard (2005), i.e., 1.5% , and the discharged water has a pH≥6.5. The seawater consumption in different sea areas is as follows:
the Baltic Sea scrubbing seawater 980m³ /h blending seawater 3600m³ /h
the North Sea scrubbing seawater 880m³ /h blending seawater 2600m³ /h

B: The technical solution of the ship FGD apparatus according to the present invention is further described hereinbelow.

### Embodiment 3:

FIG. 1 and FIG. 3 illustrate a ship FGD apparatus used to implement the method according to the present invention. An air inlet pipe 3.1 of a scrubber 3 leads a high-temperature flue gas 3.2 into the scrubber 3 from the bottom thereof, which is suitable for the implementation situation where the flue gas enters the scrubber vertically and flows upwards. A ship FGD apparatus includes a scrubber 3 and a water-saving deacidification device 10. An upper part of the scrubber 3 is the scrubbing layer 3.3 and communicates with a scrubbing seawater pump 5 by pipelines. A lower part of the scrubber 3 is the cooling layer 3.2. One end of the scrubber 3 communicates with a flue gas discharging pipe of a marine engine 1 by a scrubbing gas inlet pipe 2, and the other end connects with a scrubbing gas outlet pipe 4. The lower part of the scrubber 3 communicates with the water-saving deacidification device 10. The water-saving deacidification device 10 connects with a blending seawater pump 9, a fan 11, and an overall water drain pipe 14 for seawater suitable for discharging after being deacidified. The water-saving deacidification device 10 has an alkaline seawater blending passage at which an alkaline seawater flow regulator is provided. The flow regulator is a pump with an adjustable output or a valve with an adjustable opening, or the combination of the valve and the pump with an adjustable output. The water-saving deacidification device 10 has an air-inflow passage at which an air flow regulator is provided. The air flow regulator is a fan with an adjustable output or a valve with an adjustable opening or a damper, or the combination of a valve and a fan, or the combination of a damper and a fan. The scrubber 3 has a scrubbing seawater-inflow passage at which scrubbing seawater flow regulator is provided. The scrubbing seawater regulator is a valve with an adjustable opening or a pump with an adjustable output, or the combination of a valve and a pump with an adjustable output. A control lever is provided on the valve or the damper, and an electrical speed governor is provided on the pump or the fan. The control lever and the electrical speed governor are connected with a desulfurization controller 15. The scrubber 3 includes a housing 3.1, a cooling layer 3.2, a scrubbing layer with fillings 3.3, and a liquid collecting pool 3.7. The cooling layer 3.2 is provided under the scrubbing layer with fillings 3.3. An impurity separator 7 is installed between the scrubber 3 and the water-saving deacidification device 10. The desulfurization controller 15 includes a commanding unit 15.1, a sensor 15.2, a central processing unit (CPU) 15.3, an actuator 15.4, and a global sea area positioning device 15.5.

### Embodiment 4:

FIG. 2 and FIG. 4 demonstrate another ship FGD apparatus used to implement the method according to the present invention. The difference with the above embodiments is that the high-temperature gas enters the scrubber 3 horizontally from the side of flue gas entrance 3.4. It is suitable for the implementation situation where the flue gas enters the scrubber laterally and then goes upwards. Moreover, the desulfurization control and adjustment are done manually.

The protection scope of the present invention is not limited by the embodiments described above.

## Claims

1. A ship flue gas desulfurization method, **characterized in that** it comprises the following steps:
a. scrubbing: after cooling a high-temperature flue gas containing SO₂ discharged from a marine engine, scrubbing the flue gas, and discharging a scrubbed and cleaned flue gas; wherein said scrubbing is done with seawater in a scrubber;
b. transferring acidic seawater: transferring an acidic seawater formed by absorbing SO₂ during the scrubbing process to a water-saving deacidification device;
c. deacidifying: blending the acidic seawater into a water-saving deacidification device with alkaline seawater to make mixed seawater, and blowing air to the mixed seawater; and
d. discharging the seawater: discharging the seawater suitable to be discharged into sea after being deacidified.

2. A ship flue gas desulfurization method according to claim 1, **characterized in that** said scrubbing step of scrubbing with the seawater in the scrubber is scrubbing in the scrubber having a scrubbing layer with fillings.

3. A ship flue gas desulfurization method according to claim 1, **characterized in that** the flow of
the alkaline seawater blended into the water-saving deacidification device in the step of deacidifying is regulated by a regulator, i.e., by means of a valve with an adjustable opening and/or a pump with an adjustable output, and the flow of the air blown into the water-saving deacidification device is regulated by a regulator, i.e., by means of a valve with an adjustable opening, a damper and/or an adjustable fan with an adjustable output.

4. A ship flue gas desulfurization method of claim 1, **characterized in that** the flow of the scrubbing seawater in the scrubbing step is regulated by a regulator, i.e., by means of a valve with an adjustable opening and/or a pump with an adjustable output.

5. A ship flue gas desulfurization method according to claims 3 or 4, **characterized in that** said
regulating by the regulator is done by manual work and/or a desulfurization controller according to environmental requirements for flue gas emission and seawater discharge in a sailing area of ship.

6. A ship flue gas desulfurization method according to claim 1, **characterized in that** there is an
impurity separating step between the scrubbing step and the deacidifying step, and the separating step is to separate impurities by a separator and to discharge separated impurities through a waste pipe.

7. A ship flue gas desulfurization apparatus used for the ship flue gas desulfurization method
according to claim 1, **characterized in that** it comprises a scrubber(3) and a water-saving deacidification device (10); the upper part of said scrubber (3) is a scrubbing layer (33) in communication with a scrubbing seawater pump (5) through pipelines; the lower part of the scrubber (3) is a cooling layer (3.2); one end of the scrubber (3) is in communication with a flue gas discharging pipe of a marine engine (1) through a scrubbing gas inlet pipe (2) , and the other end is connected to a scrubbing gas outlet pipe (4); the lower part of the scrubber (3) is in communication with the water-save deacidification device (10); the water-saving deacidification device (10) connects with a blending seawater pump (9), a fan (11), and an overall drain pipe (14) for seawater that is suitable for discharge after being deacidified.

8. A ship flue gas desulfurization apparatus according to claim 7, **characterized in that** the water-saving deacidification device (10) has an alkaline seawater blending passage, at which an alkaline seawater flow regulator is provided, which is selected from a valve with an adjustable opening or/and a pump with an adjustable output.; the water-saving deacidification device (10) has an air-inflow passage, at which an air flow regulator is provided, and the air flow regulator is selected from a valve with an adjustable opening, a damper or/and a fan with an adjustable output.

9. A ship flue gas desulfurization apparatus according to claim 7, **characterized in that** the scrubber (3) is provided with a scrubbing seawater-inflow passage, at which a scrubbing seawater flow regulator selected from a valve with an adjustable opening or/and a pump with an adjustable output is installed.

10. A ship flue gas desulfurization apparatus according to claims 8 or 9, **characterized in**
**that** a
control lever is provided on the valve or the damper, an electrical speed governor is provided on the pump or the fan, and the control lever and electrical speed governor is coupled to a desulfurization controller.

11. A ship flue gas desulfurization apparatus according to claim 7, **characterized in that** the Scrubber (3) includes a housing (3.1), a cooling layer (3.2), a scrubbing layer with fillings (3.3), and a water collecting tank (3.7), wherein the cooling layer (3.2) is located under the scrubbing layer with fillings (3.3).

12. A ship flue gas desulfurization apparatus according to claim 7, **characterized in that** a separator
(7) for separating impurities is installed between the scrubber (3) and the water-saving deacidification device (10).

13. A ship flue gas desulfurization apparatus according to claim 10, **characterized in that** a desulfurization controller includes a commanding unit (15.1), a sensor (15.2), a central processing unit (15.3), an actuator (15.4), and a global sea area positioning device (15.5).
